# EUROPEAN PATENT APPLICATION

(11) **EP 4 787 778 A1**
(43) Date of publication of application: **05.08.2026**
(21) Application number: 26155514.8
(22) Date of filing: 30.01.2026
(51) Int. Cl.: H04L 9/40, H04W 12/069, H04W 12/50, H04W 12/63, H04L 9/32, H04W 4/80, H04L 9/08, G01S 13/02, G01S 5/02

(54) **SYSTEMS AND TECHNIQUES FOR PERFORMING DATA TRANSFERS AT A DISTANCE**

(30) Priority: 31.01.2025 US 202563752554 P; 23.01.2026 US 202619458416
(71) Applicant: Apple Inc., Cupertino, CA 95014 (US)
(72) Inventor: FROST, Daniel A., Cupertino, CA 95014 (US); VAN DEN BERG, Frank Andries, Cupertino, CA 95014 (US); NAIR, Sunil, Cupertino, CA 95014 (US); SHEARER, Nicholas J., Cupertino, CA 95014 (US); BRUMLEY, Robert W., Cupertino, CA 95014 (US)
(74) Representative: Heckeler, Patrick

(57) **Abstract**

A method of performing data transfers at a distance, may include transmitting, by a computing system, a signal via an ultrawide band (UWB) protocol indicating a desired data transfer and a user device. The method may include receiving, by the computing system, a confirmation signal from the user device via the UWB protocol. The method may include performing, by the computing system and using the UWB protocol, ranging and localization operations on the confirmation signal such that the computing system confirms that the confirmation signal originates from the user device. The method may include receiving encrypted data from the user device via the secure channel, the encrypted data encrypted using the second key pair. The method may include performing the desired data transfer using at least some of the encrypted data.

## Description

### CROSS-REFERENCES TO OTHER APPLICATIONS

This application claims priority to U.S. Patent Application No. 19/458,416, for "SYSTEMS AND TECHNIQUES FOR PERFORMING DATA TRANSFERS AT A DISTANCE" filed on January 23, 2026, which claims benefit of and priority to U.S. Provisional Application No. 63/752,554, for "SYSTEMS AND TECHNIQUES FOR PERFORMING DATA TRANSFERS AT A DISTANCE" filed on January 31, 2025, which is a cross-reference to "WIRELESS DATA COMMUNICATION USER INTERFACES", (P71144USP1), Provisional Application No. 63/752,423, which is herein incorporated by reference in their entireties for all purposes.

### BACKGROUND

Various methods of data transfers require proximity information and other security measures in order to prevent fraudulent data transfers. As technologies develop, systems and techniques are needed to perform secure, convenient data transfers between devices.

### BRIEF DESCRIPTION OF THE DRAWINGS

FIG. 1 illustrates a system and a process for performing a data transfer at a distance, according to certain embodiments.
FIGS. 2A-B illustrate components of a system for performing P2P data transfers at a distance, according to certain embodiments.
FIGS. 2C-F illustrate the system performing a P2P data transfer at a distance, according to certain embodiments.
FIG. 3 illustrates a flowchart of a method for performing P2P data transfers at a distance, according to certain embodiments.
FIG. 4 illustrates a flowchart of a method for performing P2P data transfers at a distance, according to certain embodiments.

### DETAILED DESCRIPTION

The ability to transfer data conveniently, efficiently and securely between various devices and/or parties is a functionality desired by many users, organizations, etc. As new technologies and protocols have been developed, systems and techniques for performing data transfers using the new technologies are close behind. For example, the telephone and other forms of wired communication have been used to transfer data for well over a century at this point. When wireless networks were developed, secure methods of data transferred were developed right along side.

Currently, many data transfers are performed wirelessly, but not necessarily over a wireless network (at least as traditionally thought of). Technologies like Bluetooth rely more on broadcast packets to generate a secure connection between two devices. Near Field Communications (NFC) is similar in some ways, but also requires a very close proximity between devices in order to perform the data transfer. The proximity of the two devices may be required in order to confirm that the two devices are who they say they are-that a bad actor is not trying to spoof a data transfer or be fraudulent in some other way. In some environments, however, it may be impractical to perform data transfers at the proximity required for NFC communication, but the speed and convenience of touchless data transfers may still be desirable.

Consider a user in a queue some distance away from a computing system with which a data transfer is to be made (e.g., a drive-through, etc.). While the user (or a device associated therewith) may be near enough to the computing system to perform certain device-to-device data transfer protocols, but not near enough for NFC or other protocols. For example, the user may be mobility-limited (e.g., in a wheelchair), in a crowd and not readily identifiable, etc. Thus, the user may not be able to use current methods and protocols of performing device-to-device data transfers. Thus, systems and techniques to perform device-to-device (sometimes "peer-to-peer" (P2P)) data transfers at a distance are desirable in order to enable the security and convenience of close-range P2P data transfer at larger distances. For clarity, P2P may mean peer-to-peer in a networking sense, and not necessarily in any other sense of the term.

One solution may be to utilize one or more wireless protocols to identify and authenticate a user device and computing system in order to perform a requested P2P data transfer at a distance. A computing system may broadcast an invitation or other notification that indicates that P2P services are available. A user device may receive the invitation and generate a prompt for display on the user device, asking the user to approve or deny the P2P services. Upon receiving an input indicating that the user desires to utilize the P2P services, the user device may transmit a confirmation to the computing device, initializing the P2P services.

The computing system may then utilize some or all of the data included in the confirmation to perform location and ranging operations (LRO) on the user device. The computing system may use the results of the LRO to verify that the user device is in fact associated with the requested data transfer. Upon verification, the user device and the computing system may establish a secure connection utilizing a secure partition of the user device and/or a secure partition of the computing system. Then, within the secure connection, the user device may transfer data in order to complete the requested data transfer. The computing system may transmit some or all of the data to a server, and receive a confirmation from the server that the data transfer has been completed. The secure connection may then be terminated. By verifying the location and range of the user device, the P2P data transfer may be performed securely without the proximity requirement of NFC communications, creating more efficient data transfers at a distance.

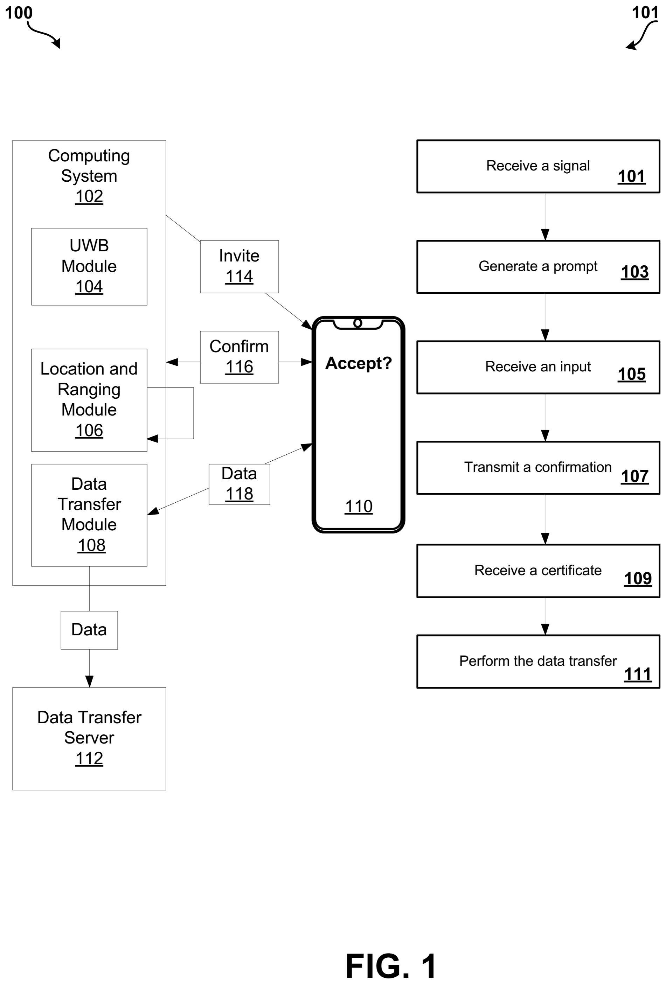

FIG. 1 illustrates a system 100 and a process 101 for performing a data transfer at a distance. The system 100 may include a computing system 102 with an Ultrawideband (UWB) module 104, a location and ranging (LR) module 106, and a data transfer module 108. The system 100 may also include user device 110 and a data transfer server 112. The computing system 102 may include one or more computing devices operating together and/or separately to perform data transfers. Thus, sensitive data may be quarantined from some components, protecting the sensitive data. In some embodiments, some components may be implemented on a first device, and other components may be implemented on a second device. The first device may include the components for housing, encrypting, and otherwise managing the sensitive data, and the second device may include components for communicating only encrypted data to other devices (e.g., the user device 110 and the data transfer server 112.

In some embodiments, all of the components of the computing system 100 may be implemented in a single device. A secure partition (physical and/or logical) may include some of the components whereas another partition may include other components. For example, as seen in FIG. 1, the UWB module 104 and the LR module 106 may be implemented in one partition, whereas the data transfer module 108 may be implemented in a secure partition. Thus, communication between the data transfer module 108 and the other components of the computing system 102 may be limited to only encrypted sensitive data and non-sensitive data. The other components of the computing system 102 may have no access aspects of the data transfer module 108 (such as keys, certificates, etc.).

The UWB module 104 may include one or more hardware and/or software components configured to transmit and receive low-energy signals to other devices. The UWB module 104 may include radio components capable of transmitting and receiving signals in a frequency range of about 6 GHz to about 10 GHz, inclusive. The UWB module 104 may also be a component of a broader wireless module. Thus, the UWB module 104 may be used to bootstrap connections using other wireless protocols (e.g., Bluetooth, Zigbee, etc.) using the UWB frequency bands (and functionalities).In some embodiments, the other wireless protocols may be used to bootstrap the UWB connection.

The LR module 106 may be connected to the UWB module 104. The LR module 106 may be configured to perform one or more LROs, such as time of flight (TOF), time delay of flight (TDOF), two-way ranging, and other such location and ranging technologies. The LR module 106 may utilize the UWB module 104 to perform LRO with an accuracy of about 10-20 cm. Thus, the LR module 106 may be used to identify and authenticate remote devices (e.g., the user device 110) based at least in part on location. Because the location accuracy of the LR module 106 is so granular and secure (e.g., by encryption of ranging signals), the computing system 102 may provide secure P2P data transfers similar to NFC communications, but at ranges of 5-10 m or more.

The data transfer module 108 may be implemented, at least in part, on a secure partition of the computing system 102. For example, the data transfer module 108 may be configured to perform encryption and decryption services on sensitive data. The secure partition may be inaccessible to a user of the computing system 102. Thus, any sensitive data received, generated, and/or stored on the computing system 102 may not be viewed, modified, etc. except by components of the data transfer module 108,

The user device 110 may be a mobile phone, tablet, laptop, wearable (e.g., watch, bracelet, brooch, etc.) or any other such computing device. The user device 110 may include an application used to perform data transfers with other devices using NFC, Bluetooth, UWB, WiFi, or any other such protocol. Some data transfers may include sensitive data, however. Thus, the user device 110 may include a secure partition where various components may perform certain tasks in order to keep sensitive data private. The application may access some of the sensitive data in the secure partition without the ability to view or modify the sensitive data (at least in a decrypted form). Thus, the sensitive data may be inaccessible to a user of the user device 110.

At 101, the user device 110 may receive an invite 114 from the computing system 102. The invite 114 may be a broadcast message that indicates that the computing system 102 is able to perform data transfers via UWB. The invite 114 may be transmitted via UWB (e.g., from the UWB module 104), Bluetooth, WiFi, or any other such protocol. The invite 114 may also include information associated with the computing system 102. For example, the invite 114 may indicate a system identifier, identifying the computing system 102 and/or components thereof (e.g., a MAC address, IP address, device name, etc.). The invite 114 may also identify an entity associated with the computing system 102 (e.g., a company name).

The invite 114 may also include information about one or more requested data transfers. For example, the computing system 102 may be implemented in a drive-through where several users may be attempting to perform data transfers at approximately the same time and at approximately the same location. The computing system 102 may not "know" which user devices are associated with which data transfer. Thus, the invite 114 may include a list of transfer IDs, each transfer ID corresponding to a respective data transfer. The user device 110 may also include data indicating the transfer ID corresponding the respective data transfer associated with the user device 110. Upon receiving the invite 114, the user device 110 may determine that the respective transfer ID is indicated in the invite 114 and is therefore relevant to the user device 110. If, for example, the invite 114 did not include the respective transfer ID, the user device 110 may ignore the invite 114.

The invite 114 may also include public key associated with the computing system 102. The user device 110 may then validate the invite utilizing a secret key corresponding to the public key. Upon validating the public key, the user device 110 may "trust" the invite 114 and/or the computing system 102. This may be combined with a PKI "root of trust" system in some embodiments..

In some embodiments, invite 114 may include a cryptographic signature, generated using the secret key by the system 102. User device 110 may then validate the signature using the public key provided, and thus "trust" the invite.

At 103, the user device 110 may generate a prompt for display on the user device 110 indicating that P2P services are available from the computing system 102. For example, the invite 114 may be broadcast to the user device 110 (and other devices) via Bluetooth (as UWB services may not be on by default). The user device 110 may then generate the prompt asking the user whether the user device 110 should enable UWB functionality (or some other wireless protocol) in order to perform the requested data transfer.

At 105, the user device 110 may receive an input indicating that user desires to utilize the P2P data transfer services. Continuing the example from above, the user may indicate a desire to utilize UWB to perform some or all of the requested data transfer (e.g., by clicking "Allow" on the prompt). In response, the user device 110 may enter a data transfer mode, enabling the UWB functionality. The application executed on the user device may then access the UWB services of the user device 110 to perform some or all of the requested data transfer.

At step 107, the user device 110 may transmit a confirmation 116 to the computing system 102. The confirmation 116 may be transmitted via UWB, Bluetooth, or any other such protocol. The confirmation 116 may include data such as a device ID, the transfer ID associated with the requested data transfer, and other such data. The confirmation 116 may also include a cryptographic key, generated by the user device 110. For example, the user device 110 may include a secure partition with a certificate service. The certificate service may store and maintain one or more cryptographic keys used for data transfers, authentication, etc., for the user device 110. Upon entering the data transfer mode, the certificate service may generate an ephemeral public-private key pair. The confirmation 116 may then include the public key of the public private key pair.

The confirmation 116 may be received by the computing system 102. The computing system 102 may then validate the confirmation 116 using the public key of the public private key pair. The computing system 102 may then "trust" the user device 110. As the computing system 102 and the user device 110 trust each other, the computing system 102 and the user device 110 may then generate, derive, and/or exchange a session key.

Then, the UWB module 104 may transmit some or all of the confirmation 116 to the data transfer module 108 and/or the LR module 106. The LR module 106 may utilize some or all of the LR module 106 to perform LRO. The LRO may utilize the session key, such that the user device 110 and/or the computing system 102 may authenticate the LRO. Based on the LRO, the LR module 106 may determine a position of the user device 110 with and accuracy at or around 10 cm. The LR module 106 may compare location information provided by the user device 110 (e.g., in the confirmation 116 and/or the session key) in order to verify that the confirmation 116 is actually sent by the user device 110 and not spoofed by a bad actor. The user device 110 (e.g., the UWB module thereof) may also perform LRO using the session key in order to verify the authenticity of the computing system 102 (and/or communications therewith).

Upon verifying that the user device 110 is in the location purported, the data transfer module 108 may generate a certificate authenticating the computing system 102. The data transfer module 108 may generate a second public private key pair, used to transmit and decrypt sensitive data. The second key pair may be an ephemeral key pair, used only for the requested data transfer with the user device 110. The certificate may be generated using a leaf certificate specific to at least a portion of the computing system 102 (e.g., the secure partition). The certificate may also utilize an intermediate certificate specific to a data transfer partner (e.g., associated with the data transfer server 112.) The certificate may also include the public key of the first key pair as a nonce and be signed by the second key pair.

At 109, the user device 110 may receive the certificate from the computing system. The user device 110 may then store some or all of the certificate within the secure partition. Then, the user device 110 may verify some or all of the certificate and may validate the signature the computing system generated on the first public key, which may be used as a nonce. Once the user device 110 verifies the certificate (and therefore the computing system 102), and access to the appropriate keys, the user device 110 and the computing system 102 may create a secure connection using one or more of the first key pair and/or the second key pair. The secure connection may be made via UWB, Bluetooth, or some other wireless protocol. The computing system 102 may then provide a services file indicating available services and details about the requested data transfer.

In some embodiments, the user device 110 and the computing system 102 may perform the LRO and certificate authentication prior to step 103. For example, the user device 110 and the computing system 102 may exchange public keys and establish a session key. Then, the certificate may be verified and the prompt generated. In response to the user input, the user device 110 and the computing system 102 may establish a secure channel (or session) using the session key and/or other cryptographic keys.

At 111, upon verifying the services file (e.g., using the public key of the second key pair), the user device 110 may transmit the requested data 118 to the computing system 102 via the UWB module 104 (or some other wireless module). The requested data 118 may include sensitive data associated with the requested data transfer (e.g., account information, etc.). The requested data 118 may then be transmitted to the data transfer module 108. Some or all of the requested data 118 may be stored and/or decrypted by the data transfer module 108. Then, the data transfer module 108 may transfer some or all of the requested data 118 to the data transfer server 112 to perform the requested data transfer.

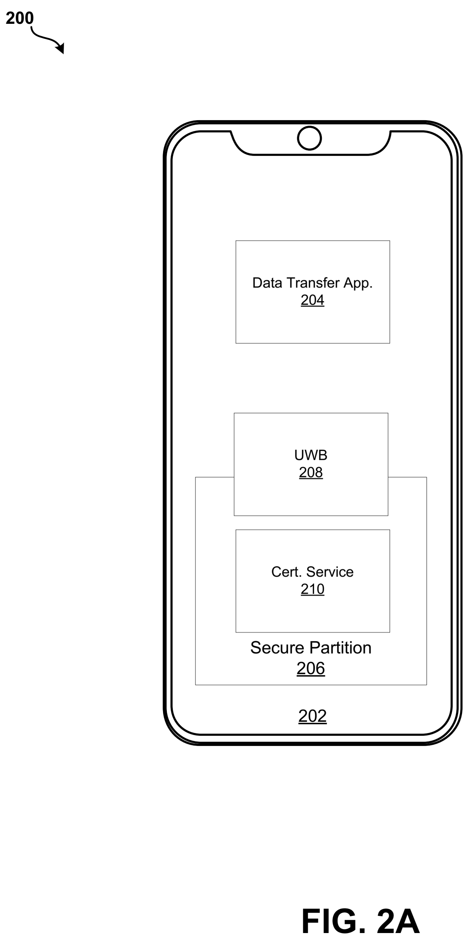

FIGS. 2A-B illustrate components of a system 200 for performing P2P data transfers at a distance, according to certain embodiments. As shown in FIG. 2A, the system 200 may include a user device 202 with a data transfer application (app) 204, a secure partition 206, a UWB service 208, and a security service 210. The user device 202 may be similar to the user device 110 in FIG. 1. As such, the user device 202 may be a mobile phone, tablet, wearable, etc. or any other device capable of performing wireless P2P data transfers. The user device 202 may have one or more wireless antennas and related services that enable the user device 202 to communicate over various protocols (e.g., WiFi, Bluetooth, 5G, 4G, 3G cellular networks, etc.). The user device 202 may also include an operating system and/or other applications that enable functionality to keep sensitive data secure when being transmitted to and from various components of the user device 202 and/or external devices.

The data transfer application 204 may be an application configured to perform secure data transfers involving sensitive data. The data transfer application 204 may therefore access one or more components of the user device 202 directly and/or through intermediary applications (e.g., the operating system) to perform the data transfers. The application 204 may cause data to be transmitted via the wireless antennas, access resources in the secure partition 206, etc. The application 204 may, for example, cause one or more account number, card numbers, etc. to be stored in a folder within the secure partition 206. The application 204 may not be configured to reveal some or any of the sensitive data within the secure partition, ensuring that the sensitive data is inaccessible by unauthorized parties.

The secure partition 206 may be include a physical and/or logical separation within one or more memory devices of the user device 202. The secure partition 206 may include services and/or datastores that are used for backend functions for data transfers such as encryption/decryption services, certificate management, etc. Sensitive data may also be stored in the secure partition 206, as described above.

The UWB service 208 may include one or more hardware and/or software components that provide UWB functionality to the user device 202. The UWB service 208 may be part of a broader wireless module including Bluetooth radios, WiFi, etc. In some embodiments, the UWB service 208 may not be "on" by default. Because UWB transmissions may be used for accurate LRO, the user device 202 may default to setting the UWB service 208 to off in order to improve privacy. The UWB service 208 may be turned on in response to certain triggers, such as location, user input, etc. Some or all of the UWB service 208 may access data and/or components stored in the secure partition 206 directly, without accessing the app 204. For example, during a data transfer, an authentication process may occur via the UWB service 208. This authentication process, while a part of a data transfer, may not be performed by the app 204. Thus, the UWB service 208 may access data and/or services within the secure partition 206 directly.

The security service 210 may be configured to manage cryptographic keys, certificates, passwords, etc. for the user device 202. The security service 210 may include one or more keys used to communicate with data processors, entities associated with the user device 202 (e.g., a manufacturer), etc. The security service 210 may also generate ephemeral keys for certain applications, such as the app 204. The security service 210 may also verify data received from remote devices by decrypting and/or validating certificates/signatures, verifying hashes, etc. Some or all of the data and/or operations stored in and performed by the certificate service may be inaccessible by a user of the user device 202, ensuring the security of sensitive data and processes involving the sensitive data.

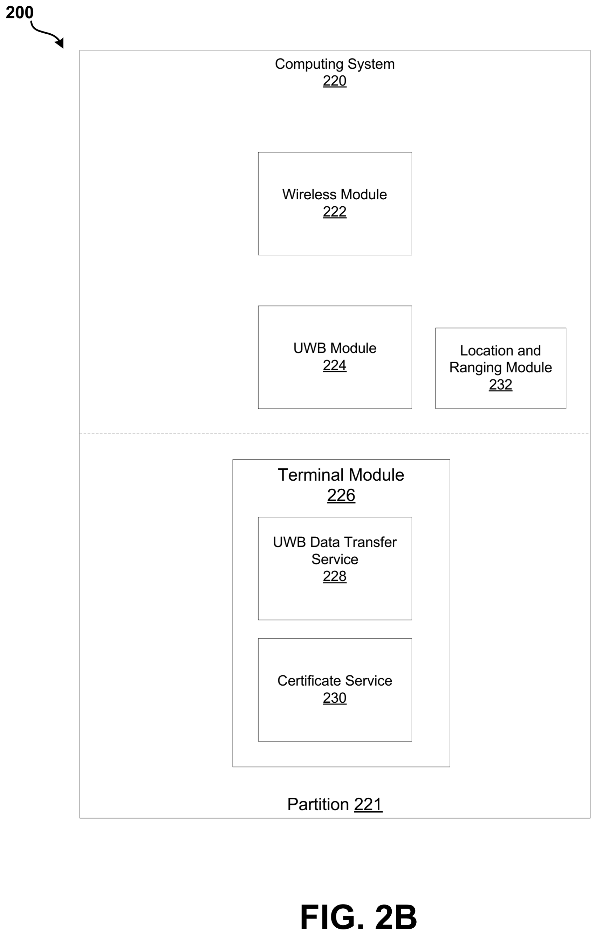

As shown in FIG. 2B, the system 200 may also include a computing system 220. The computing system 220. The computing system 220 may be similar to the computing system 102 in FIG. 1. The computing system 220 may therefore include one or more computing devices working together to perform data transfers. The computing system may include a wireless module 222, a UWB module 224, a terminal module 226 (with a UWB data transfer service 228 and a certificate service 230), and a LR module 232. As shown in FIG. 2B, the computing system 220 may include a partition 221. The partition 221 may be a secure partition that includes various components of the computing system 220. It should be understood, however, that the partition 221 may be a separate computing system. For example, the computing system 220 may include a point-of-sale (POS) system. The POS system may include various functionalities and components for transmitting and receiving data from various devices during data transfers. The partition 221 may then be a terminal (i.e., the terminal module 226 may be a separate device) configured to execute various operations as part of data transfer including sensitive data.

The wireless module 222 may include one or more radio devices configured to transmit and receive wireless signals via various protocols. The wireless module 222 may therefore have antennas and functionality to communicate via WiFi, Bluetooth, Zigbee, or any other such protocol. The computing system 220 may also include a UWB module 224. The UWB module 224 may be a component of the wireless module 222, or may be a separate device. For example, the UWB module 224 may include a dongle or other device connected to the computing system 220 in a wired or wireless connection. In some embodiments, the UWB module 224 may include software/firmware that utilizes hardware of the wireless module 222 to enable UWB functionality.

The LR module 232 may be included in the UWB module 224, or may be a separate application/applications. The LR module 232 may be configured to utilize UWB protocol to determine the location of a remote object via TOF calculations, TDOF calculation, two way radar, etc. Because of the frequencies used in UWB, the LR module 232 may be able to resolve the location of an object within an accuracy of +/- 10 cm at a range of up to about 10 m.

As discussed above, the terminal module 226 may be implemented on the same device as the wireless module 222 etc., or may be a separate device. The UWB data transfer service 228 may manage sensitive data within the terminal module 226. The UWB data transfer service 228 may utilize the UWB module 224 to send and receive some data for a data transfer, but the sensitive data associated with the data transfer may be kept solely on the terminal module 226. Thus, the UWB transfer service 228 may encrypt/decrypt data, pass data to other components of the computing system 220, etc.

The certificate service 230 may include a kernel application configured to interact with sensitive data to perform data transfers (e.g., a card number from a paymnet card, etc.) The certificate service 230 may also manage and generate certificates for the computing system 220. For example, the certificate service 230 may include a unique identifier associated with the computing system 220. The unique identifier may be used to generate a certificate for use in a data transfer. The certificate may be based at least in part on a leaf certificate associated with the terminal module 226 (e.g., using the unique identifier). The certificate may also include an intermediary certificate associated with a data transfer partner and/or another third party. The certificate service 230 and/or the UWB data transfer service 228 may also generate keys and/or random numbers for use in data transfers. The keys and/or random numbers may be stored in the kernel-level storage.

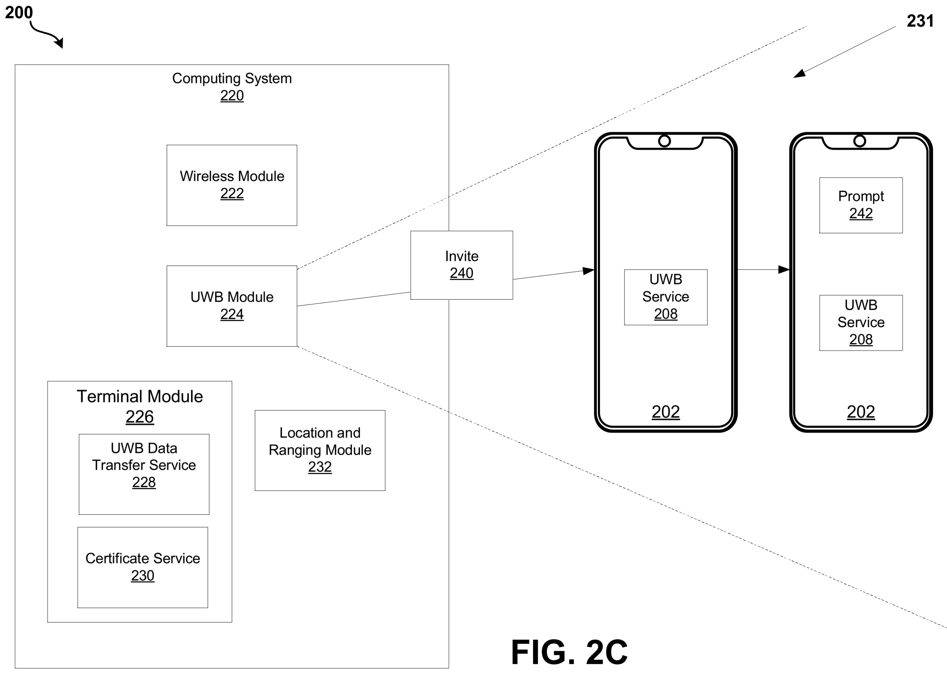

FIGS. 2C-F illustrate the system 200 performing a P2P data transfer at a distance, according to certain embodiments. In FIG. 2C, the user device 202 may move into a field of view 231 of the UWB module 224. The field of view 231 may be created by an antenna, waveguide, physical obstruction, etc. configured to limit a physical reception region of the UWB module 224. For example, the computing system 220 may be implemented in an environment with other, similar computing systems performing similar data transfers. Then, the UWB module 224 may only transmit and receive data from within the field of view 231. In other embodiments, the UWB module 224 may include two or more antennas and perform positioning by triangulation of some or all data received by the UWB module 224. Only data received from within the field of view 231 may then be processed, and data outside the field of view 231 is ignored.

The computing system 220 may generate and transmit an invite 240. The invite 240 may indicate that UWB data transfer services (or other wireless P2P services) are available to the user device 202 by the computing system 220. The invite 240 may be transmitted via UWB, WiFi, Bluetooth, or any other suitable protocol. The invite 240 may indicate an identifierassociated with the computing system 220, an entity associated with the computing system 220 (e.g., a company name, etc.), and other such information. The invite 2040 may also include information indicating one or more requested or pending data transfers. For example, the user device 202 may be associated with a requested data transfer, and other user devices may be associated with other data transfers. The invite 240 may include transfer identifiers associated with each of the data transfers. Upon receiving the invite 240, the user device 202 may determine whether the appropriate transfer identifier is included in the invite. If not, the user device 202 may ignore the invite 240. If the appropriate transfer identifier is included, the user device 202 may process some or all of the invite.

The invite 240 may also include indications of various protocols that may be used for the requested data transfer. For example, the invite 240 may be transmitted via UWB, and indicate that Bluetooth P2P data transfers are available (and/or other protocols). The user device 202 may then generate a prompt 242 that indicates that Bluetooth P2P transfers are available (or NFC transfers, WiFi transfers, UWB transfers, etc.). The prompt 242 may be displayed by the user device 202, asking for user input. The prompt 242 may therefore include a list of available protocols/services etc. The prompt 242 may be generated by the app 204, the operating system, or any other application executed by the user device.

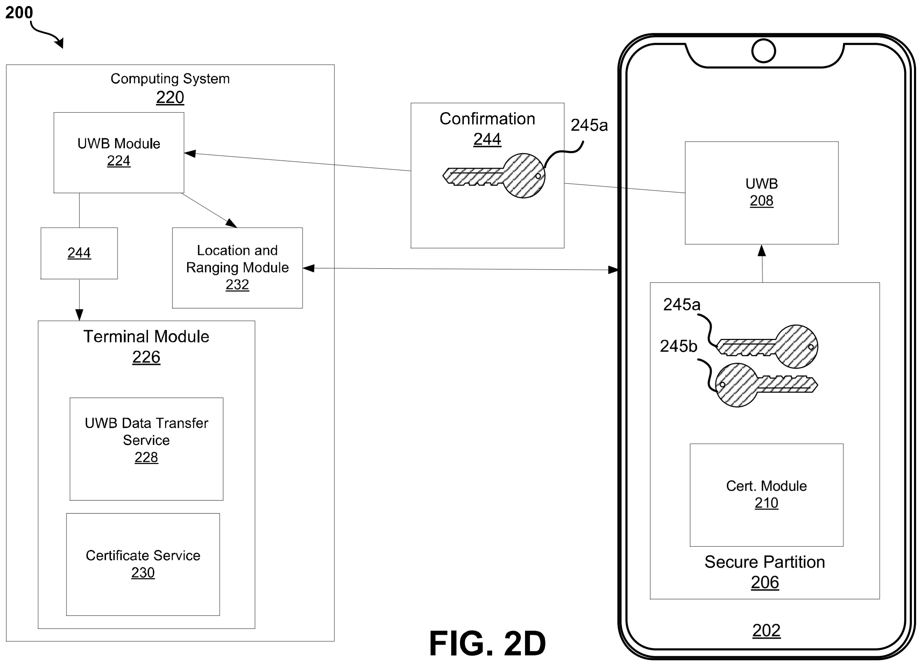

In FIG. 2D, the user device 202 may enter into a data transfer mode in response to an input at the prompt 242. As shown here, the user device 202 may enter a UWB transfer mode, although the processes described may be used for any other protocol. As part of entering the data transfer mode, the UWB service 208 may (in some embodiments) perform LRO to verify the distance and location of the computing system 220. For example, a bad actor may be transmitting invites in an attempt to lure a user device into making a data transfer. By performing LRO by the UWB 208, the user device 202 may verify (at least partially) that the computing system 220 is genuine by confirming the location of the computing system 220 and that the computing system 220 has the certificate.

The security service 210 may generate a first key pair with public key (PK) 245a and secret key (SK) 245b. The first key pair may be an ephemeral asymmetrical key pair, with at least one of the PK 245a or the SK 245b used only for the requested data transfer. In some embodiments, the SK 245b may include a large random number. The PK 245a may be a shared key with one or more computing devices (e.g., the computing system 220). The security service 210 (or some other component of the user device 202/ secure partition 206) may also generate a confirmation 244. The confirmation 244 may include information associated with the user device 202, the requested data transfer, and other information. For example, the confirmation 244 may include a device identifier, location information, a transfer ID, and other such information.

The user device 202 may transmit the confirmation 244 to the computing system 220 via the same protocol the invitation 240 was received on or via a different protocol. For example, the invite 240 may be broadcast via Bluetooth. Upon entering the data transfer mode, the user device 202 may turn on the UWB module 208 to perform the requested data transfer. Then, the user device 202 may transmit the confirmation 244 via UWB using the UWB module 208.

The confirmation 244 may be received by the UWB module 224 (or the wireless module 222 for other protocols). The UWB module 224 may transmit some or all of the confirmation 244 to the terminal module 226 and/or the LR module 232. For example, the UWB module 224 may only transmit location data provided in the confirmation 244 to the LR module 232. In some embodiments, the confirmation 244 may only be transmitted to the terminal module 226.

The LR module 232 may then perform LRO on the user device 202. The LRO may return a position of the user device with an accuracy of about +/- 10 cm. For example, the computing system 220 may be expecting a confirmation from within the field of view 231 in FIG. 2C. If the LR module 232 cannot locate the user device 202 within the field of view 231, the computing system 220 may reject the confirmation and not accept the data transfer via UWB. In embodiments, where the confirmation 244 includes location information, the LR module 232 (and/or some other component of the computing system 220) may determine if the position of the user device 202 matches the location information. One of ordinary skill in the art will recognize many different possibilities and configurations.

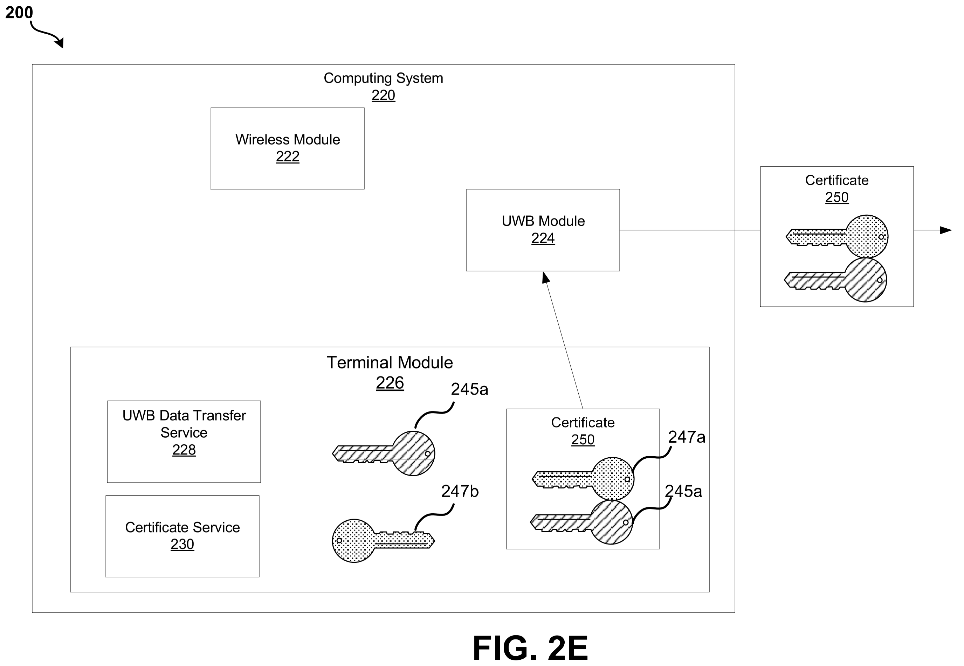

In FIG. 2E, the computing system 220 may generate a certificate 250. Once the location of the user device 202 is verified, the certificate service 230 and/or the UWB transfer service 228 may generate a second key pair with terminal public key (TPK) 247a and terminal secret key (TSK) 247b. The second key pair may be an ephemeral key pair. In other words, the second key pair may only be used for the requested data transfer. The TPK 247a may be identical to the PK 245a and the TSK 247b may be a unique key. Thus, the computing system 220 and the user device 202 may utilize an ephemeral key protocol such as the Diffie-Hellman protocol.

The certificate 250 may be based at least in part on a leaf certificate associated with the terminal module 226. Because the leaf certificate is associated with the terminal module 226, the certificate 250 may be used to verify that communications authenticated by the certificate 250 are actually from the terminal module 226 rather than some other malicious device. In other P2P protocols, this may be less important, as the proximity of the devices leaves less room for error (e.g., NFC). However, using the systems and method herein, data transfers may be performed at a distance making trust between devices important.

The certificate 250 may also include an intermediate certificate associated with a transfer partner. The transfer partner may be a data transfer host or processor, entity associated with the computing system 220 (e.g., a company), and/or some other party. The certificate 250 may therefore verify the parties involved in the data transfer. The certificate 250 may be signed with the TPK 247a, such that information included in the certificate 250 is protected. The certificate 250 may also include the PK 245a as a nonce. Therefore, the user device 202 may be able to verify that the computing system transmitting the certificate 250 to the user device 202 is actually the computing system 220 that received the confirmation 244. The certificate 250 may then be transmitted to the user device 202.

The computing system 220 may also generate a services file and transmit the services file to the user device, either with the certificate 250 and/or afterwards. The services file may include information associated with the data transfer (e.g., a listing of data to be transferred, formatting information, protocol information, etc.) and/or other services available. In some embodiments, the services file is transmitted, then decrypted by the user device 202 prior to establishing a secure channel. In other embodiments, the services file is only transmitted after the secure channel is established.

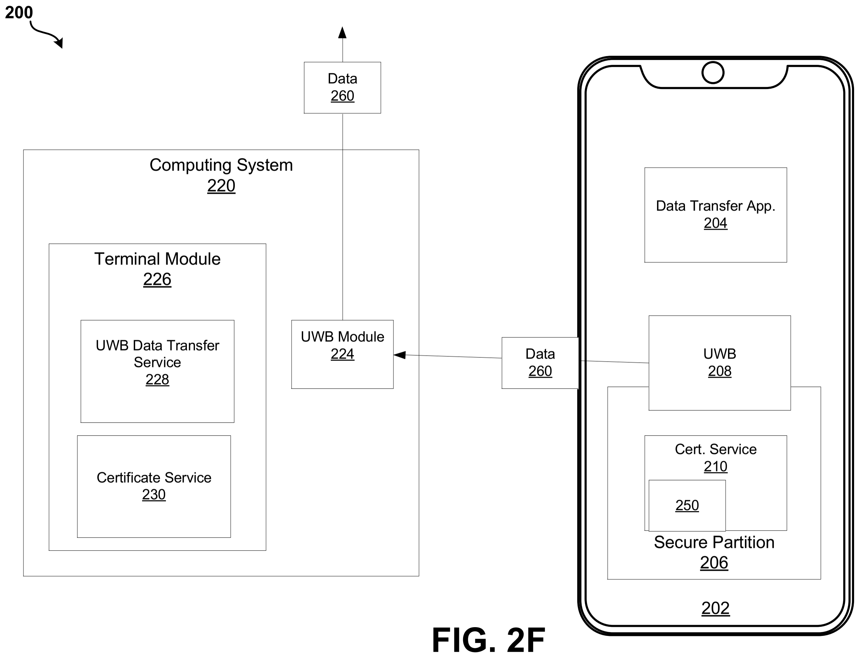

In FIG. 2F, the user device 202 may store (permanently or temporarily) the certificate 250 in the security service 210 within the secure partition 206. The security service 210 may verify some or all of the data in the certificate 250 and/or the services file. For example, the security service 210 may ensure that the nonce in the certificate 250 is the PK 245a. Thus, the user device 202 (and/the app 204) may be assured that the user device 202 is communicating with the intended recipient (the computing system 220). Then, the user device 202 may transmit and acknowledgement to the computing system 220 confirming the establishment of the secure channel.

The app 204 may then access data 260 associated with the requested data transfer. The data 260 may include sensitive information such as account numbers, card numbers, etc. The sensitive data may be encrypted using the first and/or second key pairs, or may be encrypted using a third key pair, unreadable by the computing system 220. Then, the data 260 may be transmitted by the UWB service 208 of the user device 202 to the UWB module 224.

In some embodiments, the data 260 may be transmitted to a data transfer server (e.g., associated with the transfer partner) in order to complete the data transfer. The data 260 may be transmitted directly to the data transfer server by the UWB module 224, or may be transmitted to the UWB transfer service 228 of the terminal module 226. For example, some or all of the data 260 may be decrypted and stored by the UWB transfer service 228 in order to verify the data 260 is appropriate for the requested data transfer. When the data transfer is completed, the computing system 220 and/or the user device 202 may receive a confirmation receipt and store the confirmation receipt in the terminal module 226 and the secure partition 206, respectively.

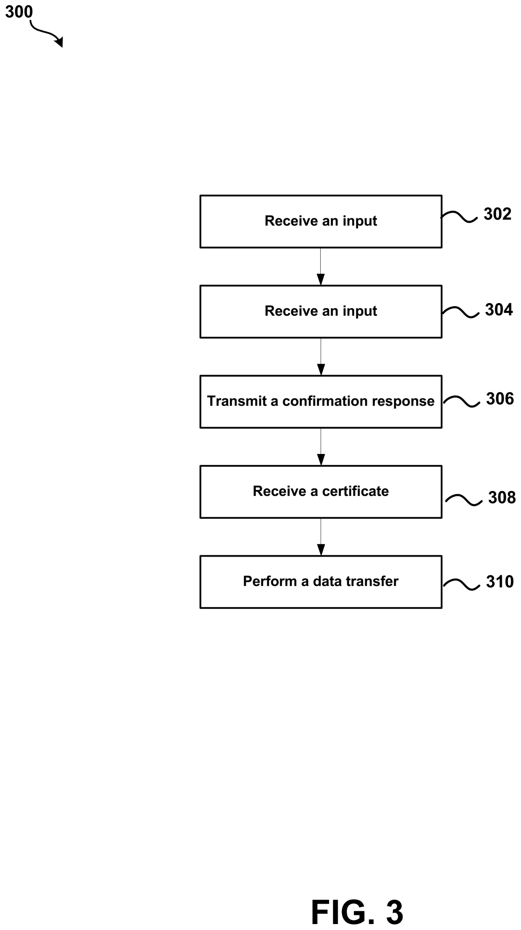

FIG. 3 illustrates a flowchart of a method 300 for performing P2P data transfers at a distance, according to certain embodiments. The steps of the method 300 may be performed by some or all of the systems and devices described herein, such as the system 100 and/or the system 200 in FIGS. 1-2F, respectively. Some steps of the method 300 may be performed in a different order than is shown here and/or may be combined with other steps. In some embodiments, some steps may be skipped altogether.

At 302, the method 300 may include transmitting, by a computing system, a signal via an ultrawide band (UWB) protocol indicating a desired data transfer and a user device. The computing system may be similar to the computing system, and include a POS system and/or terminal module. In some embodiments, the computing system may be a unitary device. The computing system may be configured to perform data transfers via one or more wireless protocols, including UWB, Bluetooth, WiFi, etc. The user device may be similar to the user device and include a mobile device, wearable, tablet, computer, etc. The signal may be similar to the signal. The signal may indicate that UWB data transfer services (or other wireless P2P services) are available to the user device by the computing system. The signal may be transmitted via UWB, WiFi, Bluetooth, or any other suitable protocol. The signal may indicate an identified associated with the computing system, an entity associated with the computing system (e.g., a company name, etc.), and other such information. The invite may also include information indicating one or more requested or pending data transfers. For example, the user device may be associated with a requested data transfer, and other user devices may be associated with other data transfers. The signal may include transfer identifiers associated with each of the data transfers.

At step 304, the method 300 may include receiving, by the computing system, a confirmation signal from the user device via the UWB protocol. The confirmation signal may be similar to the confirmation 244. The confirmation signal may include information associated with the user device, the requested data transfer, and other information. For example, the confirmation may include a device identifier, location information, a transfer ID, and other such information. The confirmation may also include an ephemeral public key of a first public private key pair.

At step 306, the method 300 may include performing, by the computing system and using the UWB protocol, ranging and localization operations on the confirmation signal such that the computing system confirms that the confirmation signal originates from the user device. The computing system may include a localization and ranging (LR) module. The LR module may then perform LRO on the user device. The LRO may return a position of the user device with an accuracy of about +/- 10 cm. For example, the computing system may be expecting a confirmation from within a field of view. If the LR module cannot locate the user device within the field of view, the computing system may reject the confirmation and not accept the data transfer via UWB. In embodiments, where the confirmation signal includes location information, the LR module (and/or some other component of the computing system) may determine if the position of the user device matches the location information. One of ordinary skill in the art will recognize many different possibilities and configurations.

At step 308, the method 300 may include establishing, by the computing system, a secure channel between the computing system and the user device over the UWB protocol utilizing a first public key pair. The first public key pair may include an ephemeral key, used only for the desired data transfer. In some embodiments, the secure connection may be made over another protocol, such as Bluetooth.

At step 310, the method 300 may include receiving, by the computing system, encrypted data from the user device via the secure channel, the encrypted data encrypted using the second key pair. The encrypted data may be similar to the data 260 in FIG. 2F and include sensitive data. The computing system may transmit some or all of the encrypted data to a data transfer server. In some embodiments, the computing system may store some or all of the encrypted data (e.g., in a terminal module).

At step 312, the method 300 may include performing, by the computing system, the desired data transfer using at least some of the encrypted data. The computing system and/or the user device may receive and store a transfer confirmation, indicating that the desired data transfer has been completed.

In some embodiments, the method 300 may include broadcasting an availability message indicating that data transfers at a distance are available. Establishing the secure channel may include receiving, by the computing system, a first public key of the first key pair, the first key pair associated with the user device. The method 300 may also include transmitting, by the computing system, a certificate signed by second key pair and including a nonce based at least in part on the first public key. The method may also include transmitting, by the computing system, a services file to the user device.

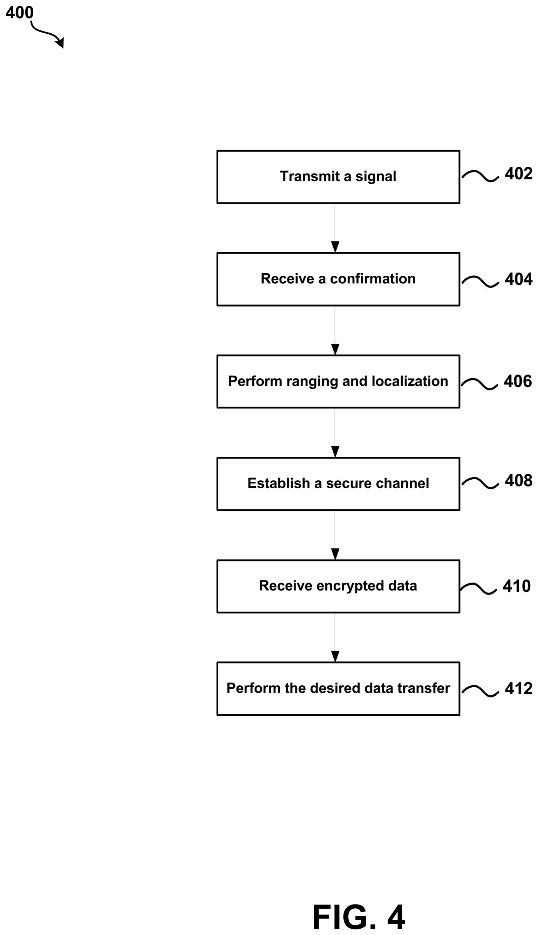

FIG. 4 illustrates a flowchart of a method 400 for performing P2P data transfers at a distance, according to certain embodiments. The steps of the method 300 may be performed by some or all of the systems and devices described herein, such as the system 100 and/or the system 200 in FIGS. 1-2F, respectively. Some steps of the method 400 may be performed in a different order than is shown here and/or may be combined with other steps. In some embodiments, some steps may be skipped altogether.

At step 402, the method 400 may include receiving, by the application executed on the user device, an input that causes the application executed on the user device to enter a data transfer mode. The application may be similar to the app 204. The data transfer model may include turning a UWB module of the user device to on. The input may be received in response to a prompt, displayed on the user device. The prompt may indicate that Bluetooth P2P transfers are available (or NFC transfers, WiFi transfers, UWB transfers, etc.). The prompt may be displayed by the user device, asking for user input. The prompt may therefore include a list of available protocols/services etc. The prompt may be generated by the application, an operating system, or any other application executed by the user device.

At step 404, the method 400 may include transmitting, by the application executed on the user device, a confirmation response to the computing system via UWB, the confirmation response comprising a first key. The confirmation response may include information associated with the user device, a requested data transfer, and other information. For example, the confirmation may include a device identifier, location information, a transfer ID, and other such information. The first key may be an ephemeral key generated by the user device for use in a single data transfer.

At step 406, the method 400 may include receiving, by the application executed on the user device, a certificate from the computing system via UWB. The certificate may include the first key and be signed with a second key. The certificate, the first key, and the second key may be used to establish a secure channel between the user device and the computing system. The computing system may perform ranging and localization processes to confirm the authenticity of the user device. The second key may be an ephemeral key generated by the computing system. The secure channel may be implemented using UWB, Bluetooth, WiFi, NFC, or any other suitable protocol.

At step 408, the method 400 may include performing, by the application executed on the user device and via the secure channel, a data transfer utilizing the data transfer services. The data transfer may be completed, at least in part, utilizing a data transfer server (e.g., the data transfer server 112 in FIG. 1).

In some embodiments, the method 400 may include receiving, by an application executed on a user device, a signal via UWB) indicating that data transfer services are available from a computing system. The method 400 may also include generating, by the application executed on the user device, a prompt on a display of the user device indicating that the data transfer services are available.

### Further embodiments

1. A method of performing data transfers at a distance, comprising:
   transmitting, by a computing system, a signal via an ultrawide band (UWB) protocol indicating a desired data transfer and a user device;
   receiving, by the computing system, a confirmation signal from the user device via the UWB protocol;
   performing, by the computing system and using the UWB protocol, ranging and localization operations on the confirmation signal such that the computing system confirms that the confirmation signal originates from the user device;
   establishing, by the computing system, a secure channel between the computing system and the user device over the UWB protocol utilizing a first key pair and/or a second key pair.;
   receiving, by the computing system, encrypted data from the user device via the secure channel, the encrypted data encrypted using the second key pair; and
   performing, by the computing system, the desired data transfer using at least some of the encrypted data.
2. The method of embodiment 1, further comprising broadcasting, by the computing system, an availability message indicating that data transfers at a distance are available.
3. The method of embodiment 1, wherein establishing the secure channel further comprises:
   receiving, by the computing system, a first public key of the first key pair, the first key pair associated with the user device; and
   transmitting, by the computing system, a certificate signed by the second key pair and comprising a nonce based at least in part on the first public key; and
   transmitting, by the computing system, a services file to the user device.
4. The method of embodiment 3, wherein the first key pair is an ephemeral key pair.
5. The method of embodiment 1, wherein the second key pair is an ephemeral key pair.
6. The method of embodiment 1, wherein performing the data transfer comprises:
   transmitting, by the computing system, at least a portion of the encrypted data to a server;
   receiving, by the computing system, a data transfer confirmation from the server;
   transmitting, by the computing system, at least a portion of the data transfer confirmation to the user device via the secure channel; and
   terminating, by the computing system, the secure channel.
7. The method of embodiment 1, wherein the secure channel is implemented using at least one of WiFi, near-field communication, or Bluetooth.
8. A system, comprising:
   a terminal device;
   a communications device, configured to utilize an ultrawideband protocol;
   one or more processors; and
   a computer-readable medium comprising instructions that, when executed by the one or more processors, cause the system to:
      transmit, by the communications device, a broadcast signal via the UWB protocol indicating a desired data transfer and a user device;
      receive, by the communications device, a confirmation signal from the user device via the UWB protocol;
      perform, by the communications device and using the UWB protocol, ranging and localization operations on the confirmation signal such that the system confirms that the confirmation signal originates from the user device;
      establish, by the communications device, a secure channel between the computing system and the user device over the UWB protocol utilizing a first public key pair;
      receive, by the communications device, encrypted data from the user device via the secure channel, the encrypted data encrypted using a second public key of the second key pair; and
      perform, by the terminal device, the desired data transfer using at least some of the encrypted data.
9. The system of embodiment 8, wherein the terminal device comprises a master service key stored in a kernel of the terminal device.
10. The system of embodiment 9, wherein the terminal device provides the communications device with a certificate and the master service key.
11. The system of embodiment 9, wherein after performing the ranging and localization operations, the communications device provides a one-time number based at least in part on the master service key to the terminal device.
12. The system of embodiment 8, wherein the communications device is a dongle connected to the terminal device.
13. The system of embodiment 8, wherein the communications device determines a location of the user device with an accuracy within a range of 20 cm- 30 cm, inclusive.
14. A non-transitory computer-readable medium comprising instructions that, when executed by one or more processors, cause the one or more processors to perform operations comprising:
   transmitting, by a computing system, a broadcast signal via an ultrawide band (UWB) protocol indicating a desired data transfer and a user device;
   receiving, by the computing system, a confirmation signal from the user device via the UWB protocol;
   performing, by the computing system and using the UWB protocol, ranging and localization operations on the confirmation signal such that the computing system confirms that the confirmation signal originates from the user device;
   establishing, by the computing system, a secure channel between the computing system and the user device over the UWB protocol utilizing a first public key pair;
   receiving, by the computing system, encrypted data from the user device via the secure channel, the encrypted data encrypted using a second public key of a second key pair; and
   performing, by the computing system, the desired data transfer using at least some of the encrypted data.
15. The non-transitory computer readable medium of embodiment 14, the operations further comprising:
   broadcasting, by the computing system, an availability message indicating that data transfers at a distance are available.
16. The non-transitory computer readable medium of embodiment 14, wherein establishing the secure channel further comprises:
   receiving, by the computing system, a first public key of the first key pair, the first key pair associated with the user device; and
   transmitting, by the computing system, a certificate signed by second key pair and comprising a nonce based at least in part on the first public key; and
   transmitting, by the computing system, a services file to the user device.
17. The non-transitory computer readable medium of embodiment 14, wherein the first key pair is an ephemeral key pair.
18. The non-transitory computer readable medium of embodiment 14, wherein the second key pair is an ephemeral key pair.
19. The non-transitory computer readable medium of embodiment 14, wherein performing the data transfer comprises:
   transmitting, by the computing system, at least a portion of the encrypted data to a server;
   receiving, by the computing system, a data transfer confirmation from the server;
   transmitting, by the computing system, at least a portion of the data transfer confirmation to the user device via the secure channel; and
   terminating, by the computing system, the secure channel.
20. The non-transitory computer readable medium of embodiment 14, wherein the secure channel is implemented using at least one of WiFi, near-field communication, or Bluetooth.
21. A method of performing a data transfer, comprising:
   receiving, by the application executed on the user device, an input that causes the application executed on the user device to enter a data transfer mode;
   transmitting, by the application executed on the user device, a confirmation response to the computing system via UWB, the confirmation response comprising a first key;
   receiving, by the application executed on the user device, a certificate from the computing system via UWB, wherein the certificate comprises the first key and is signed with a second key, and wherein the certificate, the first key, and the second key are used to establish a secure channel between the user device and the computing system in response to a ranging and localization process performed by the computing system; and
   performing, by the application executed on the user device and via the secure channel, a data transfer utilizing the data transfer services.
22. The method of embodiment 21, further comprising:
   receiving, by an application executed on a user device, a signal via ultrawideband (UWB) indicating that data transfer services are available from a computing system; and
   generating, by the application executed on the user device, a prompt on a display of the user device indicating that the data transfer services are available.
23. The method of embodiment 21, wherein the user device performs ranging and localization operations on the computing system.
24. The method of embodiment 21, wherein UWB is used to bootstrap the secure connection using Bluetooth.
25. The method of embodiment 21, wherein the certificate comprises a leaf certificate associated with the computing system.
26. The method of embodiment 21, wherein the input is received from a prompt on the user device, the prompt comprising one or more peer to peer transfer protocols.
27. The method of embodiment 21, wherein the first key is generated in a secure partition of the user device.
28. The method of embodiment 21, wherein the first key is an ephemeral key.
29. The method of embodiment 22, wherein the signal is received via Bluetooth.
30. A user device, comprising:
   one or more processors; and
   a computer-readable medium comprising instructions that, when executed by the one or more processors, cause the mobile device to perform operations to:
      receive, by an application executed on the user device, an input that causes the application executed on the user device to enter a data transfer mode;
      transmit, by the application executed on the user device, a confirmation response to the computing system via UWB, the confirmation response comprising a first key;
      receive, by the application executed on the user device, a certificate from the computing system via UWB, wherein the certificate comprises the first key and is signed with a second key, and wherein the certificate, the first key, and the second key are used to establish a secure channel between the user device and the computing system in response to a ranging and localization process performed by the computing system; and
      perform, by the application executed on the user device and via the secure channel, a data transfer utilizing the data transfer services.
31. The user device of embodiment 30, comprising a certificate service in a secure partition, configured to generate the first key.
32. The user device of embodiment 30, wherein the certificate is associated with a transfer partner.
33. The user device of embodiment 30, wherein the certificate is associated with a nonce based at least in part on the first key.
34. The user device of embodiment 30, wherein the user device performs localization and ranging operations on the computing system via UWB.
35. The user device of embodiment 30, where in the user device is within a field of view of the computing system.
36. The user device of embodiment 30, wherein the user device verifies the certificate using the first and or second key.
37. The user device of embodiment 36, wherein the user device verifies the certificate using the first key as a nonce.
38. The user device of embodiment 30, wherein the data transfer is completed in part utilizing a data transfer server.
39. The user device of embodiment 30, wherein the ranging and localization services provide a location with an accuracy of 10 cm.
40. The user device of embodiment 30, wherein a signal is received via Bluetooth to bootstrap the data transfer services.
41. The user device of embodiment 30, wherein the certificate comprises a leaf certificate associated with the computing system.

## Claims

1. A method of performing a data transfer, comprising:
receiving, by an application executed on a user device, an input that causes the application executed on the user device to enter a data transfer mode;
transmitting, by the application executed on the user device, a confirmation response to the computing system via ultrawideband (UWB), the confirmation response comprising a first key;
receiving, by the application executed on the user device, a certificate from the computing system via UWB, wherein the certificate comprises the first key and is signed with a second key, and wherein the certificate, the first key, and the second key are used to establish a secure channel between the user device and the computing system in response to a ranging and localization process performed by the computing system; and
performing, by the application executed on the user device and via the secure channel, a data transfer utilizing the data transfer services.

2. The method of claim 1, further comprising:
receiving, by the application executed on the user device, a signal via UWB indicating that data transfer services are available from a computing system; and
generating, by the application executed on the user device, a prompt on a display of the user device indicating that the data transfer services are available.

3. The method of claims 1 or 2, wherein the user device performs ranging and localization operations on the computing system.

4. The method of any of the preceding claims, wherein the certificate comprises a leaf certificate associated with the computing system.

5. The method of any of the preceding claims, wherein the input is received from a prompt on the user device, the prompt comprising one or more peer to peer transfer protocols.

6. The method of the preceding claims, wherein the first key is an ephemeral key.

7. The method of claim 2, wherein the signal is received via Bluetooth.

8. A user device, comprising:
one or more processors; and
a computer-readable medium comprising instructions that, when executed by the one or more processors, cause the user device to perform the method of any of claims 1 to 7.

9. The user device of claim 8, comprising a certificate service in a secure partition, configured to generate the first key.

10. The user device of claim 8 or 9, wherein the certificate is associated with a transfer partner.

11. The user device of any of claims 8 to 10, wherein the certificate is associated with a nonce based at least in part on the first key.

12. The user device of any of claims 8 to 11, wherein the user device performs localization and ranging operations on the computing system via UWB.

13. The user device of any of claims 8 to 12, where in the user device is within a field of view of the computing system.

14. The user device of any of claims 8 to 13, wherein the ranging and localization services provide a location with an accuracy of 10 cm.

15. A non-transitory computer-readable memory comprising instructions that, when executed by one or more processors, cause the one or more processors to perform the method of any of claims 1 to 7.
